# EUROPEAN PATENT APPLICATION

(11) **EP 4 629 169 A1**
(43) Date of publication of application: **08.10.2025**
(21) Application number: 23897169.1
(22) Date of filing: 29.08.2023
(51) Int. Cl.: G06T 7/00, H04N 5/64

(54) **OBJECT DETECTION DEVICE, OBJECT DETECTION METHOD, AND PROGRAM**

(30) Priority: 30.11.2022 JP 2022191312
(71) Applicant: Resonac Corporation, Tokyo 105-7325 (JP)
(72) Inventor: OKUNO, Katsuki, Tokyo 105-8518 (JP); OKANO, Yu, Tokyo 105-8518 (JP); MATSUZAWA, Mitsuharu, Tokyo 105-8518 (JP); TOMISAKA, Katsuhiko, Tokyo 105-8518 (JP); ICHIMURA, Takayuki, Tokyo 105-8518 (JP); IWASAKI, Naoya, Tokyo 105-8518 (JP)
(74) Representative: Strehl & Partner mbB
(86) International application number: PCT/JP2023/031353
(87) International publication number: WO 2024/116509

(57) **Abstract**

Accuracy of object detection for an image in which a large number of objects are photographed is increased. An object detection device includes an image dividing unit configured to divide a target image, in which a plurality of objects are photographed, into a plurality of partial images each including a boundary region overlapping with neighboring partial images of the partial images; an object detection unit configured to detect, for each of the partial images, an object included in the partial image; and a detection result determination unit configured to determine that, for the object detected in the boundary region, any one of detection results of the object in the partial images is a detection result of the object in the target image.

## Description

### TECHNICAL FIELD

The present disclosure relates to an object detection device, an object detection method, and a program.

### BACKGROUND ART

An object detection technique of detecting photographed objects included in an image is utilized. When object detection is performed for an image in which a large number of objects are photographed, a technique of dividing the image into a plurality of regions and performing object detection on each region is known.

For example, Non-Patent Literature 1 discloses a technique of applying a convolutional neural network to semantic segmentation of a remote sensing image. The technique disclosed in Non-Patent Literature 1 divides, into small partial images, an image having a size that cannot be directly processed by an existing convolutional neural network, and connects label maps of the partial images together to generate a label map of the original image.

### CITATION LIST

### NON-PATENT LITERATURE

Non-Patent Literature 1: Bohao Huang, Daniel Reichman, Leslie M. Collins, Kyle Bradbury, and Jordan M. Malof, "Tiling and Stitching Segmentation Output for Remote Sensing: Basic Challenges and Recommendations", arXiv:1805.12219, 2018.

### SUMMARY OF THE INVENTION

### PROBLEM TO BE SOLVED BY THE INVENTION

However, related art has an issue that the detection accuracy of an object existing near the boundary between partial images is low. Non-Patent Literature 1 proposes to divide an image into partial images with an overlap in order to avoid dividing an object at the boundary between the partial images. Non-Patent Literature 1 recommends to discard detection results near boundaries when generating a detection result of the original image by connecting detection results of partial images together.

One aspect of the present disclosure aims to increase the accuracy of object detection for an image in which a large number of objects are photographed.

### MEANS FOR SOLVING THE PROBLEM

The present disclosure includes configurations as presented below.
[1] An object detection device, including:
   an image dividing unit configured to divide a target image, in which a plurality of objects are photographed, into a plurality of partial images each including a boundary region overlapping with neighboring partial images of the partial images;
   an object detection unit configured to detect, for each of the partial images, an object included in the partial image; and
   a detection result determination unit configured to determine that, for the object detected in the boundary region, any one of detection results of the object in the partial images is a detection result of the object in the target image.
[2] The object detection device according to [1] above, in which
   the object detection unit is configured to generate the detection result including reliability of each of the objects, and
   the detection result determination unit is configured to determine that, among the detection results of the object detected in the boundary region, the detection result highest in the reliability is the detection result of the object in the target image.
[3] The object detection device according to [2] above, in which
   the target image is a photographed image in which a plurality of particles are dispersed, and
   the object includes normal particles photographed without being overlapped with other particles, and aggregated particles photographed as being overlapped with the other particles.
[4] An object detection method, including:
   a procedure of dividing a target image, in which a plurality of objects are photographed, into a plurality of partial images each including a boundary region overlapping with neighboring partial images of the partial images;
   a procedure of detecting, for each of the partial images, an object included in the partial image; and
   a procedure of determining that, for the object detected in the boundary region, any one of detection results of the object in the partial images is a detection result of the object in the target image,
   the procedures being executed by a computer.
[5] A program causing a computer to execute:
   a procedure of dividing a target image, in which a plurality of objects are photographed, into a plurality of partial images each including a boundary region overlapping with neighboring partial images of the partial images;
   a procedure of detecting, for each of the partial images, an object included in the partial image; and
   a procedure of determining that, for the object detected in the boundary region, any one of detection results of the object in the partial images is a detection result of the object in the target image.

### ADVANTAGEOUS EFFECTS OF THE INVENTION

According to an aspect of the present disclosure, it is possible to increase the accuracy of object detection for an image in which a large number of objects are photographed.

### BRIEF DESCRIPTION OF THE DRAWINGS

[FIG. 1] FIG. 1 is a diagram illustrating an example of a target image.
[FIG. 2] FIG. 2 is a diagram illustrating an example of the target image.
[FIG. 3] FIG. 3 is a block diagram illustrating an example of an entire configuration of an object detection system.
[FIG. 4] FIG. 4 is a block diagram illustrating an example of a hardware configuration of a computer.
[FIG. 5] FIG. 5 is a block diagram illustrating an example of a functional configuration of the object detection system.
[FIG. 6] FIG. 6 is a flowchart illustrating an example of a process procedure of an object detection method.
[FIG. 7] FIG. 7 is a conceptual diagram illustrating an example of an image dividing process in related art.
[FIG. 8] FIG. 8 is a conceptual diagram illustrating an example of an image dividing process in an embodiment.
[FIG. 9] FIG. 9 is a diagram illustrating an example of a partial image.
[FIG. 10] FIG. 10 is a conceptual diagram illustrating an example of detection results in partial images.
[FIG. 11] FIG. 11 is a conceptual diagram illustrating an example of detection results in the target image.
[FIG. 12] FIG. 12 is a conceptual diagram illustrating an example of the detection results in the partial images.
[FIG. 13] FIG. 13 is a conceptual diagram illustrating an example of the detection results in the target image.

### DESCRIPTION OF THE EMBODIMENTS

Hereinafter, embodiments of the present disclosure will be described with reference to the attached drawings. In the present specification and the drawings, components having substantially the same functional configuration are denoted by the same reference numerals, and duplicate descriptions thereof will be omitted.

### [Embodiments]

An embodiment of the present disclosure is an object detection system configured to detect an object from an image in which a large number of objects are photographed. In the following, an image targeted for object detection will be also referred to as a "target image". The target image in the present embodiment is an image obtained by photographing a large number of dispersed particles. The particles in the present embodiment are inorganic particles including an inorganic material as a constituent material.

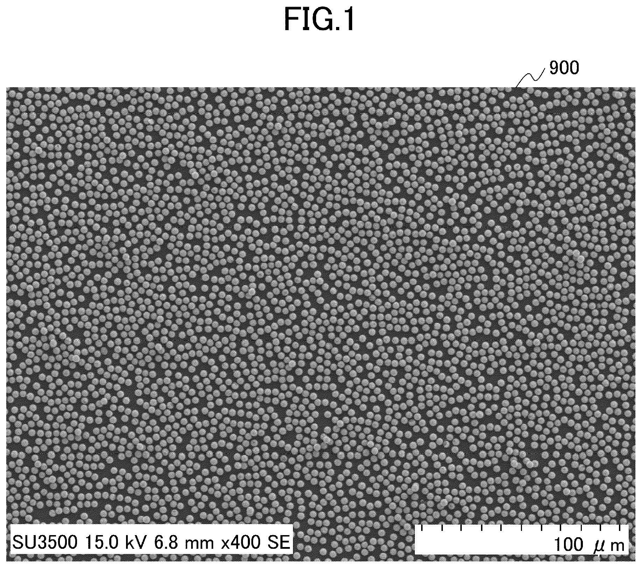

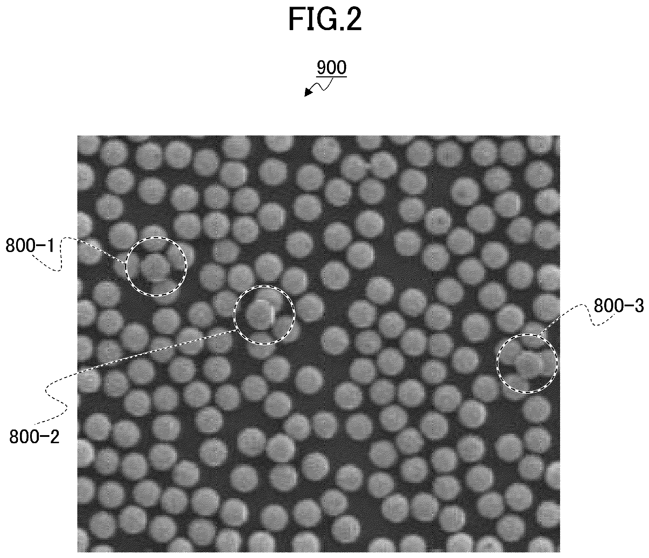

FIGS. 1 and 2 are diagrams illustrating an example of the target image in the present embodiment. FIG. 1 is a diagram illustrating an example of the entirety of the target image. As illustrated in FIG. 1, a target image 900 in the present embodiment is photographed in a state in which a large number of particles are dispersed. It is assumed that, for example, several thousand particles are photographed in the target image 900.

FIG. 2 is a view illustrating an example of an enlarged image of a part of the target image illustrated in FIG. 1. As illustrated in FIG. 2, the large number of particles photographed in the target image 900 include normal particles photographed without being overlapped with other particles, and aggregated particles photographed as being overlapped with other particles. FIG. 2 illustrates three aggregated particles 800-1 to 800-3. Of the particles photographed in the target image 900, the particles other than the aggregated particles 800-1 to 800-3 are normal particles.

The object detection system in the present embodiment is configured to perform object detection using a trained object detection model. The object detection model in the present embodiment is trained to detect normal particles and aggregated particles from the target image. Specifically, the object detection model is trained using training data in which a plurality of images (hereinafter also referred to as "training images") collected in advance are annotated with correct labels representing regions of normal particles and regions of aggregated particles. The object detection model is trained such that an error between predicted results in accordance with the training images and the correct labels annotated to the training images is optimized.

Conventional object detection models require numerous computational resources when performing object detection from an image in which a large number of objects are photographed. Therefore, the target image is divided into a plurality of partial images. By performing object detection on partial images in which a small number of objects are photographed, it is possible to reduce the computational resources required for object detection.

On the other hand, when the target image is divided into partial images, there is an issue that an object may be divided at the boundary between the partial images. The object divided at the boundary is not entirely photographed in a partial image. This is known to reduce detection accuracy or cause misdetection.

The present embodiment aims to realize an object detection system configured to accurately detect an object from a target image in which a large number of objects are photographed.

### <Entire Configuration of Object Detection System>

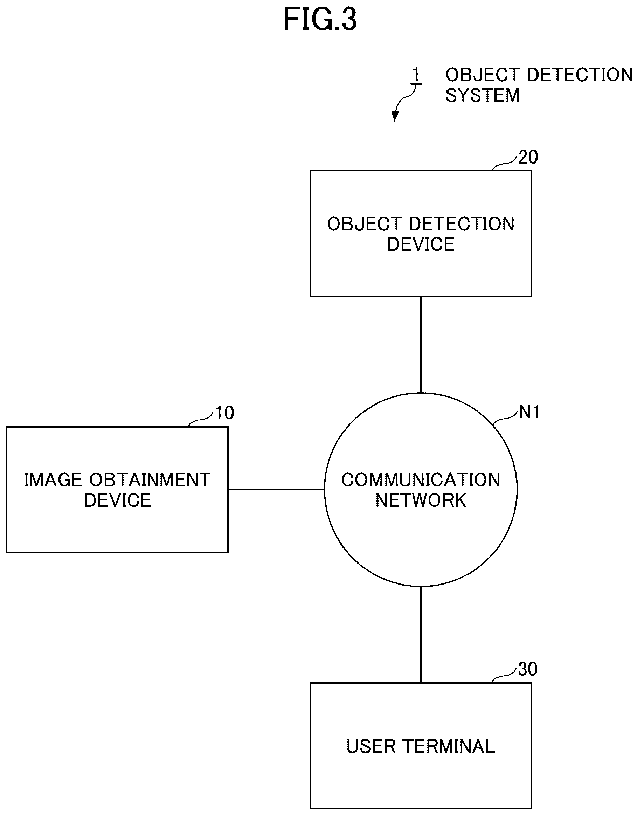

The entire configuration of the object detection system in the present embodiment will be described with reference to FIG. 3. FIG. 3 is a block diagram illustrating an example of the entire configuration of the object detection system in the present embodiment.

As illustrated in FIG. 3, an object detection system 1 in the present embodiment includes an image obtainment device 10, an object detection device 20, and a user terminal 30. The image obtainment device 10, the object detection device 20, and the user terminal 30 are connected so as to enable data communication via a communication network N1, such as a LAN (Local Area Network), the Internet, or the like.

The image obtainment device 10 is an optical device configured to obtain a target image on which object detection is to be performed. The image obtainment device 10 may be a digital camera configured to photograph a still image or may be a video camera configured to shoot a moving image. The image obtainment device 10 may be an optical microscope, a scanning electron microscope (SEM), a transmission electron microscope (TEM), or the like in accordance with the size of a target object. Also, the image obtainment device 10 may be an information processing device, such as a personal computer connected to various cameras, or may be an inspection device equipped with various cameras.

The user terminal 30 is an information processing terminal operated by a user, such as a personal computer, a tablet terminal, a smart phone, or the like. The user terminal 30 is configured to obtain a target image from the image obtainment device 10, and transmit the obtained target image to the object detection device 20. The user terminal 30 is configured to receive detection results from the object detection device 20, and output the received detection result to the user.

The object detection device 20 is an information processing device, such as a personal computer, a work station, a server, or the like, configured to detect an object from the target image obtained by the image obtainment device 10. The object detection device 20 is configured to receive the target image from the user terminal 30. The object detection device 20 is configured to detect objects from the received target image, and transmit detection results to the user terminal 30.

The entire configuration of the object detection system 1 illustrated in FIG. 3 is just an example, and there can be various system configuration examples in accordance with applications and purposes. For example, the object detection device 20 may be implemented by a plurality of computers or may be implemented as a cloud computing service. Also, for example, the object detection system 1 may be implemented by a stand-alone information processing device having the functions of the image obtainment device 10, the object detection device 20, and the user terminal 30.

### <Hardware Configuration of Object Detection System>

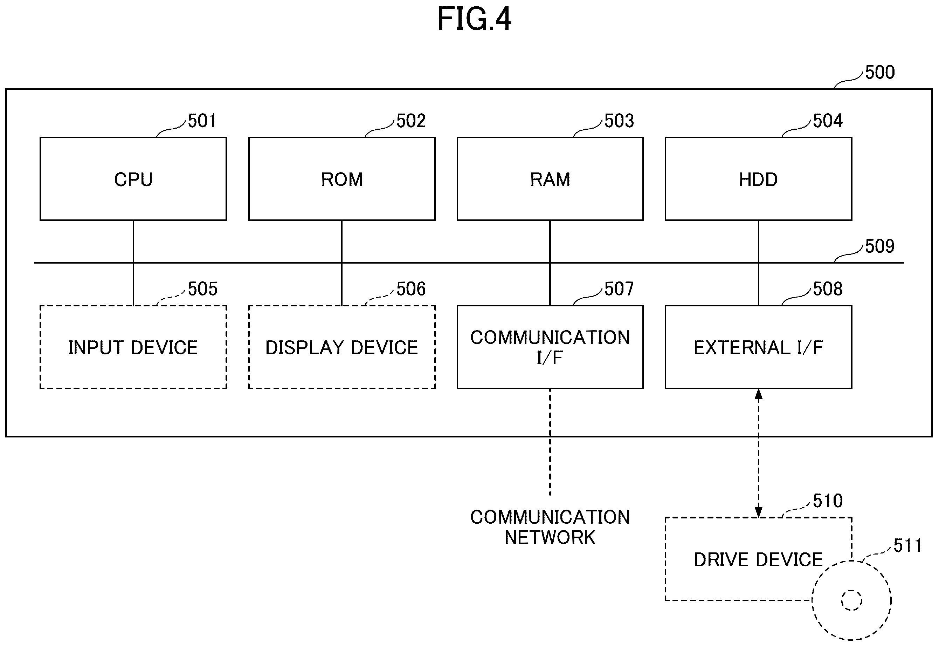

A hardware configuration of the object detection system 1 in the present embodiment will be described with reference to FIG. 4.

### <<Hardware Configuration of Computer>>

The image obtainment device 10, the object detection device 20, and the user terminal 30 in the present embodiment are implemented by a computer or the like. FIG. 4 is a block diagram illustrating an example of a hardware configuration of a computer 500 in the present embodiment.

As illustrated in FIG. 4, the computer 500 includes a CPU (Central Processing Unit) 501, a ROM (Read Only Memory) 502, a RAM (Random Access Memory) 503, an HDD (Hard Disk Drive) 504, an input device 505, a display device 506, a communication I/F (Interface) 507, and an external I/F 508. The CPU 501, the ROM 502, and the RAM 503 form what is called a computer. The hardware components of the computer 500 are connected to each other via a bus line 509. The input device 505 and the display device 506 may be in the form of being connected to the external I/F 508 in use.

The CPU 501 is an arithmetic logic unit configured to realize controls and functions of the entire computer 500 by reading out programs and data on the RAM 503 from a storage device such as the ROM 502, the HDD 504, or the like, and performing processing.

The ROM 502 is one example of a non-volatile semiconductor memory (storage device) that retains programs and data even if the power source is turned off. The ROM 502 functions as a main storage device that stores various programs, data, and the like necessary for the CPU 501 to perform various programs installed in the HDD 504. Specifically, the ROM 502 stores a boot program performed upon start-up of the computer 500, such as BIOS (Basic Input/Output System), EFI (Extensible Firmware Interface), and the like, and data for OS (Operating System) setting, network setting, and the like.

The RAM 503 is one example of a volatile semiconductor memory (storage device) from which programs and data are deleted when the power source is turned off. The RAM 503 is a DRAM (Dynamic Random Access Memory), a SRAM (Static Random Access Memory), or the like. The RAM 503 provides a work area into which various programs installed in the HDD 504 are deployed by the CPU 501.

The HDD 504 is one example of a non-volatile storage device that stores programs and data. The programs and data stored in the HDD 504 are: OS that is basic software controlling the entire computer 500; applications that provide various functions on the OS; and the like. The computer 500 may utilize, instead of the HDD 504, a storage device using a flash memory as a storage medium (e.g., SSD: Solid State Drive).

The input device 505 is what is used by a user for inputting various signals, such as a touch panel, an operation key or button, a keyboard or mouse, a microphone in which audio data, such as voice and sound, is input.

The display device 506 is formed of: a display configured to display an image, such as a liquid crystal display, an organic EL (Electro-Luminescence) display, or the like; and a speaker configured to output audio data, such as voice and sound; and the like.

A communication I/F 507 is an interface that is connected to a communication network and in which the computer 500 performs data communication.

The external I/F 508 is an interface with an external device. The external device is a drive device 510 or the like.

The drive device 510 is a device in which a recording medium 511 is set. As used herein, the recording medium 511 includes CD-ROMs, flexible disks, and media configured to optically, electrically, or magnetically record information, such as magneto-optical disks and the like. Also, the recording medium 511 may include semiconductor memories configured to electrically record information, such as ROMs, flash memories, and the like. Thereby, the computer 500 can read from and write to the recording medium 511 via the external I/F 508.

For example, various programs to be installed in the HDD 504 are installed when the recording medium 511 delivered is set in the drive device 510 connected to the external I/F 508, and various programs stored in the recording medium 511 are read out by the drive device 510. Alternatively, various programs to be installed in the HDD 504 may be installed by being downloaded from a network different from the communication network via the communication I/F 507.

### <Functional Configuration of Object Detection System>

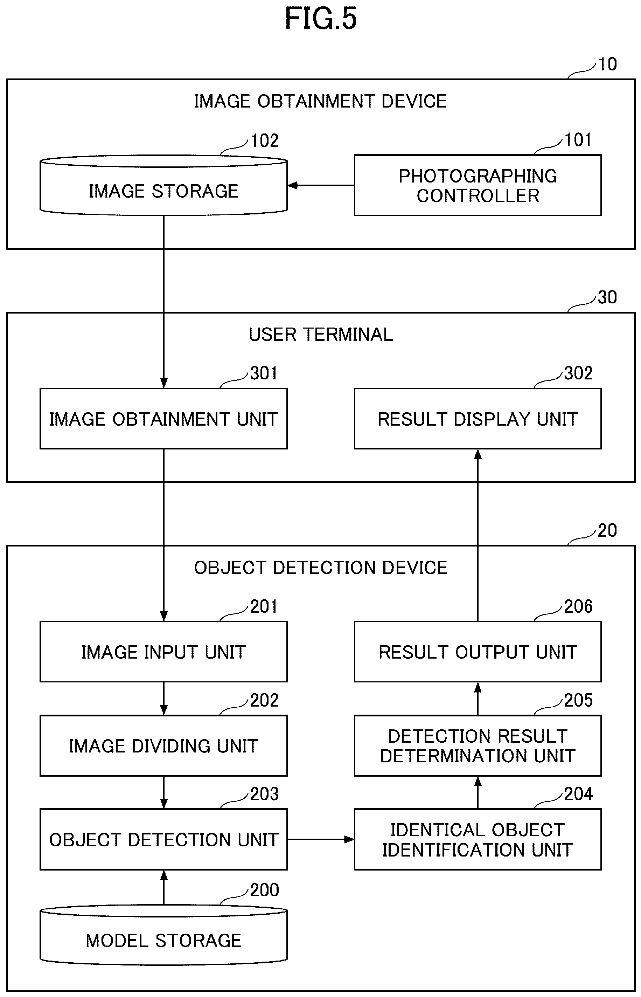

The functional configuration of the object detection system in the present embodiment will be described with reference to FIG. 5. FIG. 5 is a block diagram illustrating an example of the functional configuration of the object detection system 1 in the present embodiment.

### <<Functional Configuration of Image Obtainment Device>>

As illustrated in FIG. 5, the image obtainment device 10 in the present embodiment includes a photographing controller 101 and an image storage 102.

The photographing controller 101 is implemented by a camera connected to the external I/F 508 illustrated in FIG. 4. The image storage 102 is implemented by the HDD 504 illustrated in FIG. 4.

The photographing controller 101 is configured to adjust photographing conditions of a camera (e.g., an angle of view, a magnification, and the like) such that a plurality of objects are photographed, thereby photographing a target image. The photographing controller 101 may photograph the target image in response to a user's operation, or may photograph the target image when predetermined conditions are satisfied. The predetermined conditions are, for example, when an object to be inspected is transferred to a predetermined position in an inspection device. The photographing controller 101 may photograph a still image, or may shoot a moving image and then extract an image in which a plurality of objects are included.

The image storage 102 is configured to store the target image photographed by the photographing controller 101. The image storage 102 may store the target image in association with information of the target image. The information of the target image includes, for example, a photographing date and time, information indicating an object to be photographed, photographing conditions, and the like.

### <<Functional Configuration of Object Detection Device>>

As illustrated in FIG. 5, the object detection device 20 in the present embodiment includes a model storage 200, an image input unit 201, an image dividing unit 202, an object detection unit 203, an identical object identification unit 204, a detection result determination unit 205, and a result output unit 206.

The image input unit 201, the image dividing unit 202, the object detection unit 203, the identical object identification unit 204, the detection result determination unit 205, and the result output unit 206 are implemented through processes that are performed by the CPU 501 executed in accordance with programs developed on the RAM 503 from the HDD 504 illustrated in FIG. 4. The model storage 200 is implemented by the HDD 504 illustrated in FIG. 4.

The model storage 200 stores a trained object detection model. The object detection model is a machine learning model configured to respond to an input of an image, and output detection results obtained by detecting objects from the input image. The detection results include region information representing the scope of a region in which the detected objects are photographed, identification information that identifies the object photographed in each region, and reliability of the detection result for each object.

The configuration of the object detection model is, for example, a convolutional neural network (CNN). The object detection model can use Faster R-CNNs (Region-Based Convolutional Neural Networks), Mask R-CNNs, or the like.

The image input unit 201 is configured to receive the target image from the user terminal 30, thereby receiving an input of the target image. Alternatively, the image input unit 201 may be configured to receive an input of the target image by obtaining the target image from the image obtainment device 10 in response to a request from the user terminal 30.

The image dividing unit 202 is configured to divide the target image, input to the image input unit 201, into a plurality of partial images. The image dividing unit 202 is configured to divide the target image so as to avoid partial lacking of an object due to being divided at the boundary between the partial images. Specifically, the target image is divided into the partial images so as to include regions overlapping with each other such that at least one of the neighboring partial images includes the entirety of the object. Therefore, each of the partial images divided by the image dividing unit 202 includes a region that does not overlap with the neighboring partial image (hereinafter also referred to as a "center region") and a region that overlaps with the neighboring partial image (hereinafter also referred to as a "boundary region").

The object detection unit 203 is configured to, for each of the partial images divided by the image dividing unit 202, detect the objects photographed in the partial image and obtain reliability for each of the detected objects. The object detection unit 203 is configured to input each partial image to the object detection model read out from the model storage 200, thereby calculating a detection result of each partial image.

The identical object identification unit 204 is configured to identify identical objects among the objects detected in the boundary regions included in the neighboring partial images. The identical object identification unit 204 is configured to obtain regions in which the objects are detected from the detection results of the neighboring partial images, and identify a region in which the identical object is detected in accordance with similarity between the obtained regions.

The detection result determination unit 205 is configured to determine, for the object identified by the identical object identification unit 204, any one of the detection results of the object in the partial images as a detection result of the object in the target image. The detection result determination unit 205 is configured to determine that, among the detection results of the object in the partial images, the detection result the highest in the reliability is the detection result of the object in the target image.

The result output unit 206 is configured to generate a detection result of the target image in accordance with the detection result of each partial image. When generating the detection result of the target image, the result output unit 206 uses the detection result, determined by the detection result determination unit 205, as the detection result of the object detected in the boundary region. The result output unit 206 is configured to transmit the generated detection result of the target image to the user terminal 30.

### <<Functional Configuration of User Terminal 30>>

As illustrated in FIG. 5, the user terminal 30 in the present embodiment includes an image obtainment unit 301 and a result display unit 302.

The image obtainment unit 301 and the result display unit 302 are implemented through processes that are performed by the CPU 501 executed in accordance with programs developed on the RAM 503 from the HDD 504 illustrated in FIG. 4.

The image obtainment unit 301 is configured to obtain a target image from the image obtainment device 10 in response to a user's operation. The image obtainment unit 301 is configured to transmit the target image, obtained from the image obtainment device 10, to the object detection device 20.

The result display unit 302 is configured to receive the detection result of the target image from the object detection device 20. The result display unit 302 is configured to display, on the display unit 506, the received detection result of the target image.

### <Process Procedure of Object Detection System>

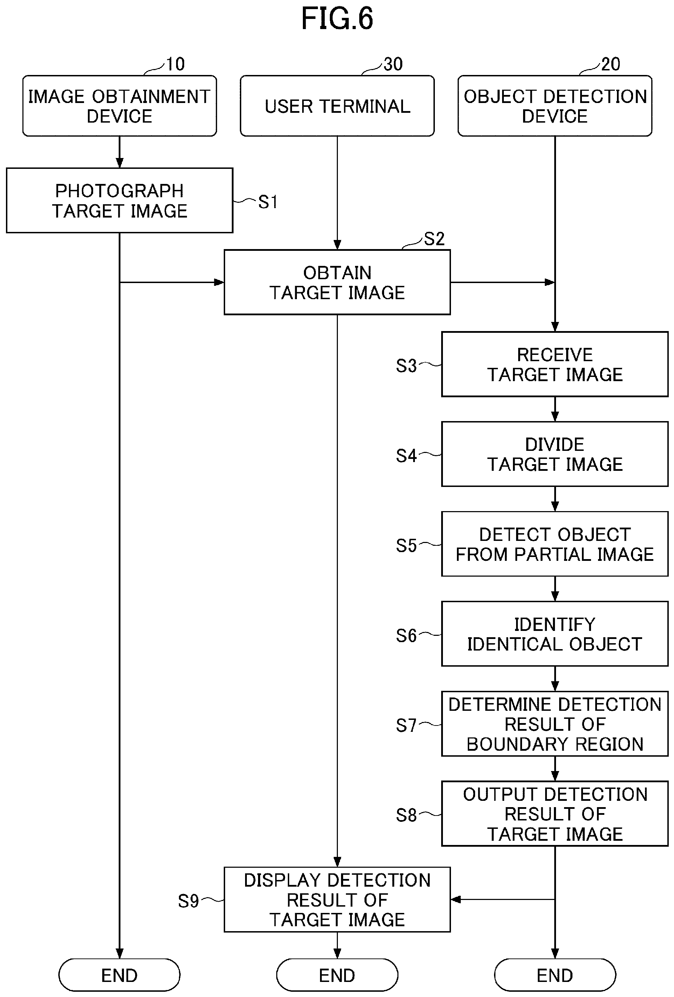

A process procedure of an object detection method performed by the object detection system 1 in the present embodiment will be described with reference to FIG. 6. FIG. 6 is a flowchart illustrating an example of the process procedure of the object detection method in the present embodiment.

In step S1, the photographing controller 101 included in the image obtainment device 10 adjusts the angle of view of a camera such that a plurality of objects are photographed, thereby photographing a target image. Next, the photographing controller 101 stores the photographed target image in the image storage 102.

In step S2, the image obtainment unit 301 included in the user terminal 30 transmits, to the image obtainment device 10, a request for obtainment of the target image in response to a user's operation. In response to the request for obtainment received from the user terminal 30, the image obtainment device 10 reads out the target image stored in the image storage 102, and transmits the read-out target image to the user terminal 30. The image obtainment unit 301 transmits, to the object detection device 20, the target image received from the image obtainment device 10.

In step S3, the image input unit 201 included in the object detection device 20 receives the target image from the user terminal 30. Next, the image input unit 201 transmits the received target image to the image dividing unit 202.

In step S4, the image dividing unit 202 included in the object detection device 20 receives the target image from the image input unit 201. Next, the image dividing unit 202 divides the received target image into a plurality of partial images. Subsequently, the image dividing unit 202 transmits the plurality of partial images to the object detection unit 203.

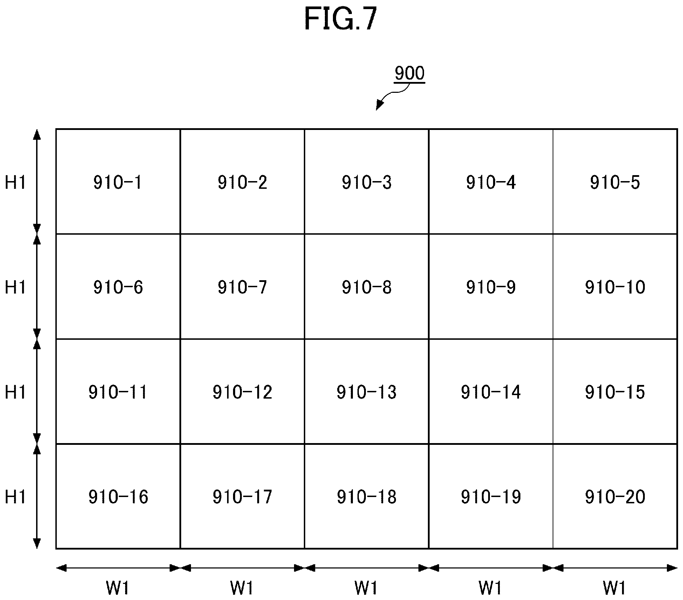

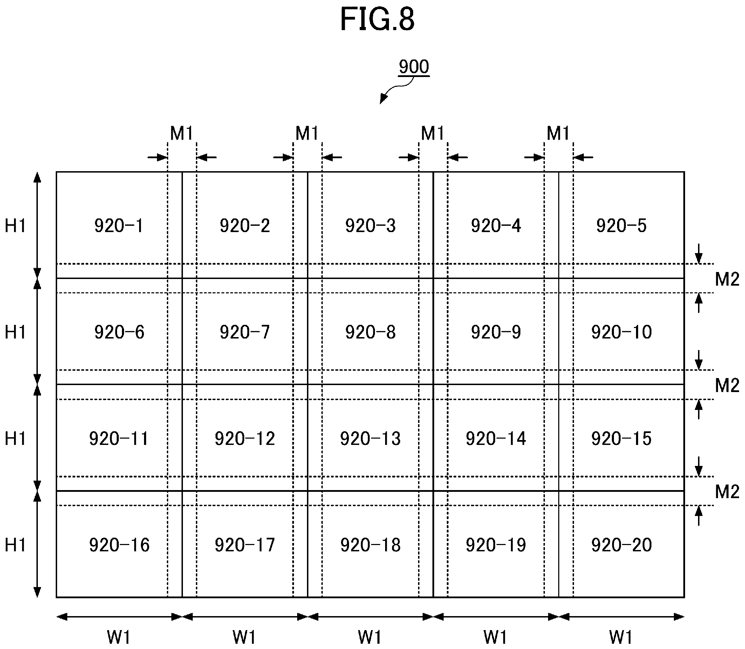

An image dividing process in the present embodiment will be described with reference to FIGS. 7 and 8.

FIG. 7 is a diagram illustrating an example of an image dividing process in related art. As illustrated in FIG. 7, according to the image dividing process in the related art, the target image 900 is vertically and horizontally divided into partial images 910-1 to 910-20 at equal intervals without overlapping. In the example of FIG. 7, the target image 900 is divided at W1 intervals in the horizontal direction and divided at H1 intervals in the vertical direction. Therefore, the partial images 910-1 to 910-20 are each a rectangle having a width of W1 and a height of H1. The intervals W1 and the intervals H1 at which the target image 900 is divided may be determined as desired, and the number of partial images 910 may also be determined as desired.

FIG. 8 is a diagram illustrating an example of an image dividing process in the present embodiment. As illustrated in FIG. 8, according to the image dividing process in the present embodiment, the target image is divided so as to avoid partial lacking of an object due to the object being divided at the boundary between the partial images. Specifically, the target image is divided into the partial images so as to include regions overlapping with each other such that at least one of the neighboring partial images includes the entirety of the object.

In the example illustrated in FIG. 8, the target image 900 is divided into partial images 920-1 to 920-20 in a state in which a boundary region of width M1 is provided between the partial images next to each other in the horizontal direction, and a boundary region of width M2 is provided between the partial images next to each other in the vertical direction. The width M1 and the width M2 of the overlapping regions may be determined as desired in accordance with the size of objects and the distance between objects in the target image 900.

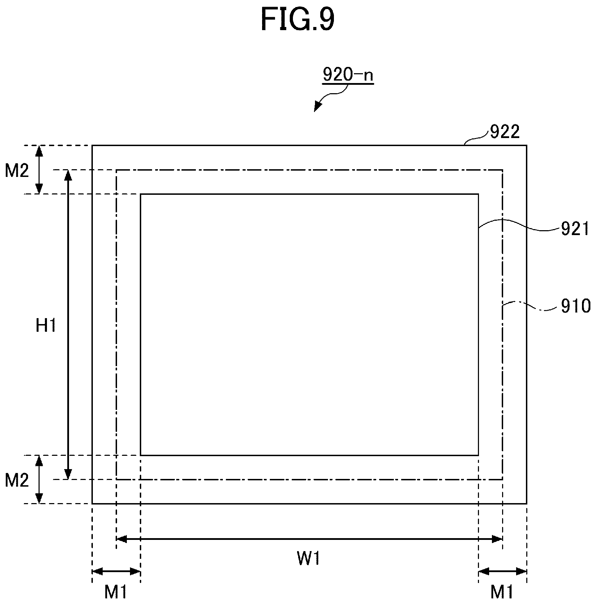

FIG. 9 is a diagram illustrating an example of the partial image in the present embodiment. As illustrated in FIG. 9, a partial image 920 in the present embodiment includes a center region 921 that does not overlap with neighboring partial images, and a boundary region 922 that overlaps with the neighboring partial images. The center region 921 is a rectangle having a width of (W1-M1) and a height of (H1-M2). The boundary region 922 is a region remaining after removal of the center region 921 from the partial image 920.

The description will be continued with reference to FIG. 6. In step S5, the object detection unit 203 included in the object detection device 20 receives a plurality of partial images from the image dividing unit 202. Next, the object detection unit 203 reads out a trained object detection model from the model storage 200.

Subsequently, the object detection unit 203 inputs each of the received partial images to the trained object detection model, thereby detecting the object photographed in each partial image and obtaining reliability for each detected object. By using, for example, the softmax function in an output layer of the object detection model, the reliability can be obtained in percentage. Here, no detection is performed on an object that partially lacks due to the object being divided at the ends of the partial image. The object detection unit 203 transmits, to the identical object identification unit 204 and the result output unit 206, a detection result of each partial image output from the object detection model.

In step S6, the identical object identification unit 204 included in the object detection device 20 receives the detection result of each partial image from the object detection unit 203. Next, the identical object identification unit 204 identifies identical objects among the objects detected in the boundary regions included in the plurality of neighboring partial images. Next, the identical object identification unit 204 transmits, to the detection result determination unit 205, information indicating the identical object.

Specifically, the identical object identification unit 204, first, obtains each region in which the object is detected, from the detection results of the plurality of the neighboring partial images. Next, the identical object identification unit 204 calculates similarity between regions for all combinations of regions obtained from a partial image and regions obtained from the neighboring partial images.

The similarity in the present embodiment can be, for example, an IoU (Intersection over Union) evaluation index. The IoU evaluation index is an index indicating the degree of overlap between two regions. The IoU evaluation index is a value obtained by dividing the common part of two regions by the union of these regions. The IoU evaluation index takes a value of 0 or more and 1 or less, and the closer the value is to 1, the more similar the two regions are. However, the similarity between regions is not limited to the IoU evaluation index, and any criterion that can calculate similarity of images can be used.

Subsequently, the identical object identification unit 204 identifies a combination of regions in which the calculated similarity is equal to or more than a predetermined threshold. Then, the identical object identification unit 204 outputs the identified combination of regions as information indicating the identical object.

In step S7, the detection result determination unit 205 included in the object detection device 20 receives information indicating the identical object from the identical object identification unit 204. Next, the detection result determination unit 205 obtains detection results of the partial images in which the object is photographed, in accordance with the information indicating the identical object. Subsequently, the detection result determination unit 205 identifies the detection result the highest in reliability among the obtained detection results of the object in the partial images. Next, the detection result determination unit 205 transmits the identified detection result to the result output unit 206 as a detection result of the object detected in the boundary regions.

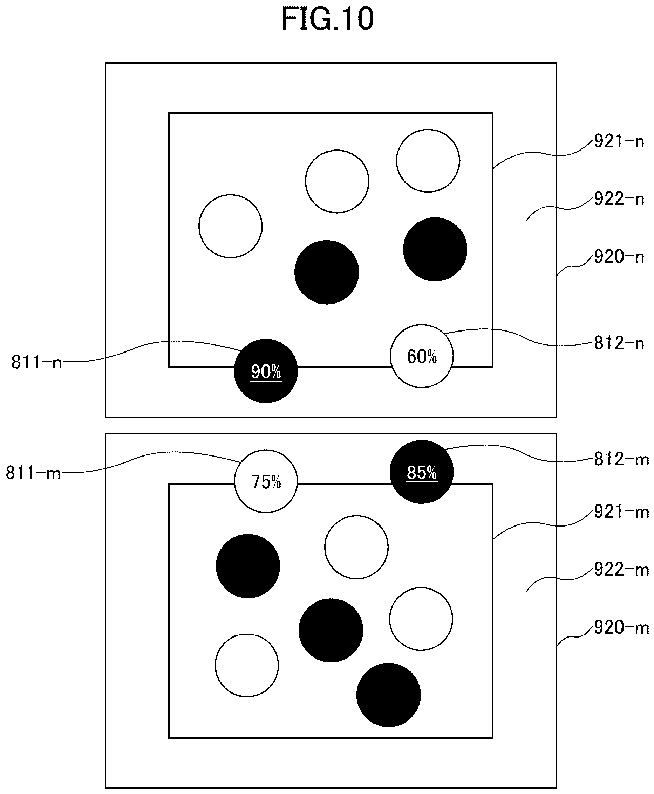

The detection result determination process in the present embodiment will be described with reference to FIGS. 10 to 13.

FIG. 10 is a conceptual diagram illustrating an example of the detection results in the partial images. FIG. 10 is an example of the detection results obtained by the object detection model configured to recognize, in pixel-units, the regions in which the objects are photographed, and illustrates the partial images of two points that are vertically next to each other in the drawing.

In FIG. 10, black circles and white circles indicate different types of detected particles. Here, with reference to the normal particles and the aggregated particles illustrated in FIG. 2, the black circles indicate the normal particles, and the white circles indicate the aggregated particles. The percentages within the circles indicate the reliability of the detection results indicated by the circles. In the example of FIG. 10, the reliability is indicated only for the objects detected in the boundary regions, but in the actual detection results, the reliability is calculated for all of the objects.

As illustrated in FIG. 10, an object 811-n detected in a partial image 920-n and an object 811-m detected in a partial image 920-m indicate different types of particles, according to the detection results. Similarly, an object 812-n detected in the partial image 920-n and an object 812-m detected in the partial image 920-m indicate different types of particles, according to the detection results.

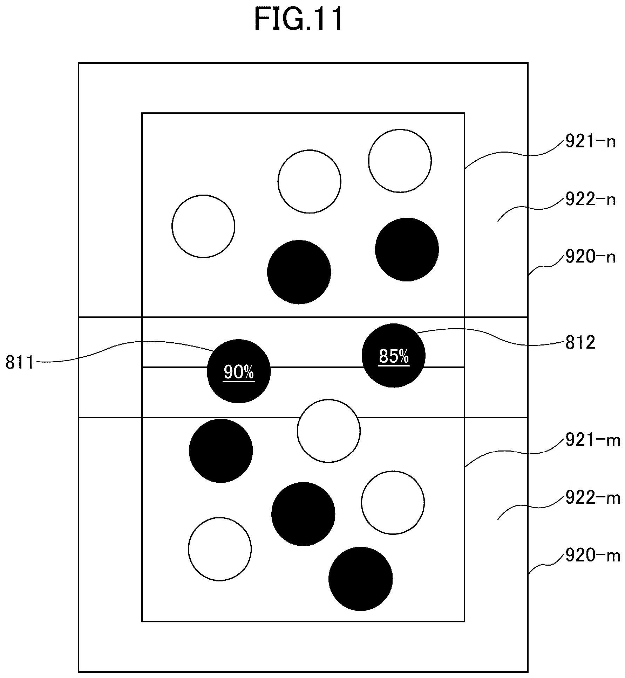

FIG. 11 is a conceptual diagram illustrating an example of the detection results in the target image. FIG. 11 is an example of a conceptual target image and detection results generated by overlapping the identical objects, identified by the identical object identification unit 204, with each other in the partial images of the two points illustrated in FIG. 10.

For confirmation through comparison between FIG. 10 and FIG. 11, the object 811-n detected in the partial image 920-n and the object 811-m detected in the partial image 920-m are an identical object 811, and the object 812-n detected in the partial image 920-n and the object 812-m detected in the partial image 920-m are an identical object 812. Here, the normal particle of the object 811-n and the aggregated particle of the object 811-m illustrated in FIG. 10 indicate different classification results for the identical object. Similarly, the aggregated particle of the object 812-n and the normal particle of the object 812-m illustrated in FIG. 10 indicate different classification results for the identical object. That is, different classification results are obtained for the objects detected in the boundary regions.

In the present embodiment, the detection result determination unit 205 determines that, among the detection results of the object detected in the boundary regions, the detection result the highest in the reliability is the detection result of the object. Specifically, as illustrated in FIG. 11, the object 811 is determined as the normal particle, and the object 812 is determined as the normal particle.

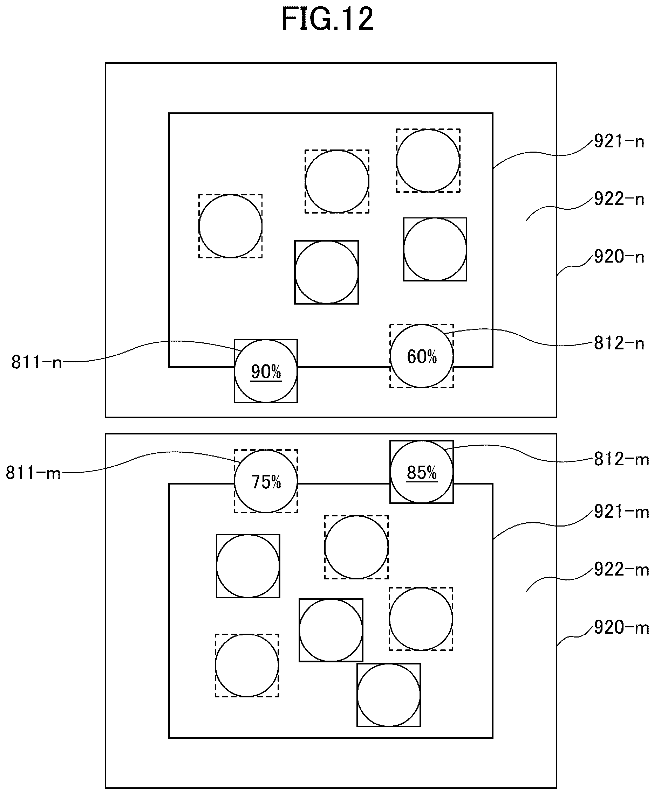

FIG. 12 is a conceptual diagram illustrating an example of the detection results in the partial images. FIG. 12 is an example of the detection results obtained by the object detection model configured to recognize the positions of photographed objects with rectangular regions, and indicates the partial images of two points that are vertically next to each other in the drawing.

In FIG. 12, solid-line rectangles and dashed-line rectangles indicate different types of detected particles. Here, with reference to the normal particles and the aggregated particles illustrated in FIG. 2, the solid-line rectangles indicate the normal particles, and the dashed-line rectangles indicate the aggregated particles. The percentages within the rectangles indicate the reliability of the detection results indicated by the rectangles. In the example of FIG. 12, the reliability is indicated only for the objects detected in the boundary regions, but in the actual detection results, the reliability is calculated for all of the objects.

As illustrated in FIG. 12, the object 811-n detected in the partial image 920-n and the object 811-m detected in the partial image 920-m indicate different types of particles, according to the detection results. Similarly, the object 812-n detected in the partial image 920-n and the object 812-m detected in the partial image 920-m indicate different types of particles, according to the detection results.

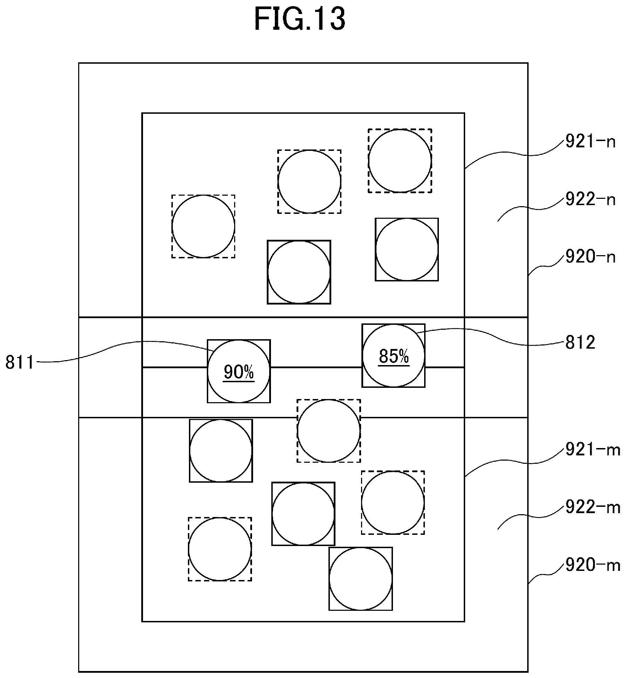

FIG. 13 is a conceptual diagram illustrating an example of the detection results in the target image. FIG. 13 is an example of a conceptual target image and detection results generated by overlapping the identical objects, identified by the identical object identification unit 204, with each other in the partial images of the two points illustrated in FIG. 12.

For confirmation through comparison between FIG. 12 and FIG. 13, the object 811-n detected in the partial image 920-n and the object 811-m detected in the partial image 920-m are the identical object 811, and the object 812-n detected in the partial image 920-n and the object 812-m detected in the partial image 920-m are the identical object 812. Here, the normal particle of the object 811-n and the aggregated particle of the object 811-m illustrated in FIG. 12 indicate different classification results for the identical object. Similarly, the aggregated particle of the object 812-n and the normal particle of the object 812-m illustrated in FIG. 12 indicate different classification results for the identical object. That is, different classification results are obtained for the objects detected in the boundary regions.

In the present embodiment, the detection result determination unit 205 determines that, among the detection results of the object detected in the boundary regions, the detection result the highest in the reliability is the detection result of the object. Specifically, as illustrated in FIG. 13, the object 811 is determined as the normal particle, and the object 812 is determined as the normal particle.

The description will be continued with reference to FIG. 6. In step S8, the result output unit 206 included in the object detection device 20 receives the detection result of each partial image from the object detection unit 203. Next, the result output unit 206 receives, from the detection result determination unit 205, the detection results of the object detected in the boundary regions.

Subsequently, the result output unit 206 generates the detection result of the target image in accordance with the detection result of each partial image. Here, the result output unit 206 uses the detection result, determined by the detection result determination unit 205, as the detection result of the object detected in the boundary regions. The result output unit 206 transmits, to the user terminal 30, the generated detection result of the target image.

In step S9, the result display unit 302 included in the user terminal 30 receives, from the object detection device 20, the detection result of the target image. The result display unit 302 displays, on the display unit 506, the received detection result of the target image.

### <Effects of Embodiments>

The object detection device 20 in the present embodiment divides a target image, in which a plurality of objects are photographed, into a plurality of partial images, detects an object for each of the partial images, and determines that, for the object detected in boundary regions, any one of detection results of the object in the partial images is a detection result of the object in the target image. The partial image in the present embodiment includes a boundary region overlapping with neighboring partial images, and thus the object is not divided at the boundary between the partial images. Also, the detection result in the present embodiment includes the detection result of the object detected in the boundary region. Therefore, the object detection device 20 in the present embodiment can increase the accuracy of object detection for an image in which a large number of objects are photographed.

The object detection device 20 in the present embodiment generates detection results including reliability determined for each object, and determines that, among the detection results of the object detected in the boundary regions, the detection result the highest in the reliability is the detection result of the object. Therefore, according to the object detection device 20 in the present embodiment, it is possible to further increase the accuracy of object detection for an image in which a large number of objects are photographed.

The object detection device 20 in the present embodiment detects normal particles photographed without being overlapped with other particles, and aggregated particles photographed as being overlapped with other particles, from a target image photographed in a state in which a plurality of particles are dispersed. Therefore, according to the object detection device 20 in the present embodiment, the normal particles and the aggregated particles can be detected with high accuracy from an image photographed in a state in which a large number of particles are dispersed.

### [Notes]

Each of the functions of the embodiments described above can be implemented by one or more processing circuits. The "processing circuit" in the present specification includes a processor programmed to execute functions by software, such as a processor mounted by an electronic circuit, and devices, such as ASIC (Application Specific Integrated Circuit), DSP (Digital Signal Processor), FPGA (Field Programmable Gate Array), conventional circuit modules, and the like, designed to execute the above-described functions.

Although the embodiments of the present invention have been described above in detail, the present invention is not limited to these embodiments, and various modifications or alterations are possible within the scope of the gist of the inventions recited in the claims.

The present application claims the priority to Japanese Patent Application No. 2022-191312, filed with the Japan Patent Office on November 30, 2022, the entire contents thereof are incorporated herein by reference.

### REFERENCE SIGNS LIST

- 1: Object detection system
- 10: Image obtainment device
- 101: Photographing controller
- 102: Image storage
- 20: Object detection device
- 200: Model storage
- 201: Image input unit
- 202: Image dividing unit
- 203: Object detection unit
- 204: Identical object identification unit
- 205: Detection result determination unit
- 206: Result output unit
- 30: User terminal
- 301: Image obtainment unit
- 302: Result display unit

## Claims

1. An object detection device, comprising:
an image dividing unit configured to divide a target image, in which a plurality of objects are photographed, into a plurality of partial images each including a boundary region overlapping with neighboring partial images of the partial images;
an object detection unit configured to detect, for each of the partial images, an object included in the partial image; and
a detection result determination unit configured to determine that, for the object detected in the boundary region, any one of detection results of the object in the partial images is a detection result of the object in the target image.

2. The object detection device according to claim 1, wherein
the object detection unit is configured to generate the detection result including reliability of each of the objects, and
the detection result determination unit is configured to determine that, among the detection results of the object detected in the boundary region, the detection result highest in the reliability is the detection result of the object in the target image.

3. The object detection device according to claim 2, wherein
the target image is a photographed image in which a plurality of particles are dispersed, and
the object includes normal particles photographed without being overlapped with other particles, and aggregated particles photographed as being overlapped with the other particles.

4. An object detection method, comprising:
a procedure of dividing a target image, in which a plurality of objects are photographed, into a plurality of partial images each including a boundary region overlapping with neighboring partial images of the partial images;
a procedure of detecting, for each of the partial images, an object included in the partial image; and
a procedure of determining that, for the object detected in the boundary region, any one of detection results of the object in the partial images is a detection result of the object in the target image,
the procedures being executed by a computer.

5. A program causing a computer to execute:
a procedure of dividing a target image, in which a plurality of objects are photographed, into a plurality of partial images each including a boundary region overlapping with neighboring partial images of the partial images;
a procedure of detecting, for each of the partial images, an object included in the partial image; and
a procedure of determining that, for the object detected in the boundary region, any one of detection results of the object in the partial images is a detection result of the object in the target image.
